# EUROPÄISCHE PATENTSCHRIFT

(11) **EP 2 076 408 B1**
(45) Veröffentlichungstag und Bekanntmachung des Hinweises auf die Patenterteilung: **17.03.2010**
(21) Anmeldenummer: 07820959.0
(22) Anmeldetag: 05.10.2007
(51) Int. Cl.: B60R 1/00, B60R 11/04

(54) **VORRICHTUNG FÜR EIN KRAFTFAHRZEUG MIT EINER DREHBAR GELAGERTEN KAMERAEINHEIT**
DEVICE FOR A MOTOR VEHICLE, COMPRISING A ROTATABLY MOUNTED CAMERA UNIT
DISPOSITIF POUR VÉHICULE À MOTEUR ÉQUIPÉ D'UNE UNITÉ CAMÉRA MONTÉE PIVOTANTE

(30) Priorität: 09.10.2006 DE 102006048373
(43) Veröffentlichungstag der Anmeldung: 08.07.2009
(73) Patentinhaber: Huf Hülsbeck & Fürst GmbH & Co. KG, 42551 Velbert (DE)
(72) Erfinder: SCHÜTZ, Heiko, 42549 Velbert (DE)
(74) Vertreter: Vogel, Andreas
(86) Internationale Anmeldenummer: PCT/EP2007/060585
(87) Internationale Veröffentlichungsnummer: WO 2008/043713

(56) Entgegenhaltungen:
- WO-A-2004/012962
- WO-A-2008/022717
- JP-A- 8 150 875
- JP-A- 11 334 471

## Beschreibung

Die Erfindung betrifft eine Vorrichtung für ein Kraftfahrzeug mit einer drehbar gelagerten Kameraeinheit, die über einen Motor in eine Ruheposition und in eine aktive Position bringbar ist, und einem Schutzelement, das drehbar um eine erste Achse in eine Schließstellung und in eine Offenstellung führbar ist, wobei in der Schließstellung die Kameraeinheit in ihrer Ruheposition von außen unzugänglich hinter dem Schutzelement sich befindet, und in der Offenstellung des Schutzelementes die Kameraeinheit in die aktive Position zur Bilderfassung bewegbar ist.

Der Einsatz von Kameras zur Fahrzeugumfelderfassung ist bekannt. Derartige Kameras werden beispielsweise als Einpark- und/oder Rangierhilfeeinrichtung für Kraftfahrzeuge verwendet, um insbesondere die mit dem konventionellen Spiegel nicht einsehbaren Bereiche zu erfassen.

In der EP 1 529 688 A1 ist eine Kameraanordnung für Kraftfahrzeuge mit einer Kameraeinheit zur Bilderfassung offenbart, wobei die Kameraeinheit in einer nicht aktiven Position von außen im Wesentlichen unzugänglich hinter einem schwenkbaren Schutzelement angeordnet ist. Bei dieser Vorrichtung ist die Kameraeinheit unmittelbar am Schutzelement befestigt. Nachteiligerweise hat sich gezeigt, dass die unmittelbare Anordnung der Kamera am Schutzelement störungsanfällig ist. Aufgrund von Witterungseinflüssen und Verschleißerscheinungen dichtet das Schutzelement nach einer gewissen Zeit nicht mehr zufriedenstellend ab, so dass die am Schutzelement befestigte Kamera gewissen Schmutz- und Feuchtigkeitsbelastungen ausgesetzt ist. Insbesondere die Objektive der Videokamera müssen deshalb häufig gereinigt werden. Außerdem kann die Kamera aufgrund ihrer Anordnung mutwillig leicht beschädigt werden, indem beispielsweise das Schutzelement zerstört wird.

Aus der JP 08150875 A ist eine gattungsgemäße Vorrichtung bekannt.

Es ist Aufgabe der vorliegenden Erfindung, eine Vorrichtung für ein Kraftfahrzeug mit einer drehbar gelagerten Kameraeinheit zu schaffen, welche die oben genannten Nachteile vermeidet, insbesondere eine größere Funktionalität aufweist, einen wirksamen Schutz der Kameraeinheit ermöglicht, ohne die Qualität der Bilderfassung einzuschränken.

Zur Lösung dieser Aufgabe wird eine Vorrichtung mit den Merkmalen des Anspruches 1 vorgeschlagen. In den abhängigen Ansprüchen sind bevorzugte Weiterbildungen ausgeführt.

Dazu ist erfindungsgemäß vorgesehen, dass die Kameraeinheit um eine zweite Achse, die beabstandet zur ersten Achse angeordnet ist, aus der Ruheposition in die aktive Position bewegbar ist, das Schutzelement über einen Schwenkarm mit der ersten Achse verbunden ist, und der Motor einen kraftfahrzeugseitigen Mechanismus antreibt, der sowohl mit dem Schutzelement als auch mit der Kameraeinheit in mechanischer Verbindung steht, wobei der Mechanismus derart ausgestaltet ist, dass in einem Betriebszustand die Kameraeinheit vom Mechanismus entkoppelt ist und eine Bewegung des Schutzelementes von der Schließstellung in die Offenstellung durchführbar ist, wobei die Kameraeinheit in der Ruheposition verbleibt.

Bei der erfindungsgemäßen Vorrichtung ist die Kameraeinheit fahrzeugseitig angeordnet und befindet sich in ihrer Ruheposition in einer geschützten Lage. Auch wenn das Schutzelement von seiner Schließstellung in seine Offenstellung bewegt wird, verbleibt zunächst die Kameraeinheit in ihrer Ruheposition. In einer definierten Offenstellung des Schutzelementes bewegt der Mechanismus zeitlich versetzt die Kameraeinheit in die aktive Position, in der die Kameraeinheit zur Bilderfassung eingesetzt werden kann. Durch die gewollte Trennung der Bewegungsabläufe des Schutzelementes und der Kameraeinheit, wird wirksam eine etwaige Kollision beider sich bewegenden Elemente wirksam vermieden. Erst wenn das Schutzelement sich in einer definierten Offenstellung befindet, wird die Kameraeinheit nach außen verschwenkt. Weiterhin vorteilhaft ist, dass durch ein mutwilliges Öffnen des Schutzelementes keine Bewegung der Kamera aus ihrer geschützten Ruheposition nach sich zieht, so dass etwaige Beschädigungen der Kameraeinheit wirksam vermieden werden können.

Erfindungsgemäß ist der Mechanismus als Getriebe ausgeführt, das ein Antriebsglied, an dem der Motor angreift, ein Koppelglied und ein Abtriebsglied aufweist, das an der ersten Achse angreift. Vorteilhafterweise ist das Koppelglied zwischen dem Abtriebsglied und dem Antriebsglied angeordnet. Hierbei kann das Koppelglied gelenkartig mit dem Antriebsglied verbunden sein, wodurch ein kompaktes Getriebe erzielbar ist.

In einer möglichen Ausführungsform ist das Antriebsglied an einer Achse drehbar gelagert, über die der Motor eine Drehbewegung in den Mechanismus einleitet. Das Antriebsglied überträgt diese vom Motor eingeleitete Drehbewegung auf das Koppelglied, welches gleichzeitig das Abtriebsglied, an dem der Schwenkarm des Schutzelementes angeordnet ist, antreibt. Folglich bewegt sich der Schwenkarm um die erste Achse und führt das Schutzelement von der Schließstellung in die Offenstellung. Vorzugsweise bilden das Abtriebsglied und der Schwenkarm ein einheitliches Bauteil, welches um die erste Achse drehbar gelagert ist.

Vorteilhafterweise weist das Antriebsglied ein Aktivierungsmittel auf, das in einem gekoppelten Betriebszustand des Mechanismus auf die Kameraeinheit wirkt, wodurch die Kameraeinheit von der Ruheposition in die aktive Position bewegbar ist, und in dem entkoppelten Betriebszustand des Mechanismus einen definierten Abstand zur Kameraeinheit aufweist. In der Ruheposition der Kameraeinheit sowie in der Schließstellung des Schutzelementes befindet sich der Mechanismus im entkoppelten Betriebszustand. Wird durch den Motor eine Bewegung in den Mechanismus eingeleitet, erfolgt zunächst eine Bewegung des Schutzelementes in seine Offenstellung, wobei das Aktivierungsmittel noch keine Kraft auf die Kameraeinheit ausübt, um diese aus ihrer Ruheposition zu bewegen. Erst in einer definierten Offenstellung des Schutzelementes bewegt das Aktivierungsmittel die Kameraeinheit aus ihrer Ruheposition in die aktive Position, wobei gleichzeitig das Schutzelement sich in eine weitere Offenstellung bewegt. Das Aktivierungsmittel kann als Schwenkarm ausgebildet sein, wobei der Schwenkarm und das Antriebsglied materialeinheitlich als ein einheitliches Bauteil ausgeführt sein kann.

In einer möglichen Ausführungsform der Erfindung kann die Kameraeinheit einen Kraftangriffsbereich aufweisen, auf den das Aktivierungsmittel im gekoppelten Betriebszustand des Mechanismus einwirkt. Vorteilhafterweise sind das Aktivierungsmittel und der Kraftangriffsbereich derart zueinander angeordnet, dass im entkoppelten Betriebszustand eine Bewegung des Schutzelementes von der Schließstellung in die Offenstellung durchführbar ist bis der Mechanismus in den gekoppelten Zustand wechselt und zeitlich versetzt zur Bewegung des Schutzelementes eine Bewegung der Kameraeinheit von der Ruheposition in die aktive Position einleitet. Der Kraftangriffsbereich der Kameraeinheit kann als eine Art Nocken ausgeführt sein, der an der zweiten Achse, um die sich die Kameraeinheit von ihrer Ruheposition in ihre aktive Position verschwenken lässt, angeordnet ist. Während des Verschwenkens der Kameraeinheit, gleitet das Aktivierungsmittel am Nocken ab, der die Kameraeinheit nach außen verschwenkt. Hierbei ist der Nocken fest mit der Kameraeinheit verbunden.

In einer bevorzugten Ausführungsform der Erfindung liegt das Koppelglied derart am Abtriebsglied, dass durch ein manuelles Bewegen des Schutzelementes von der Schließstellung in die Offenstellung das Abtriebsglied vom Koppelglied sich entkoppelt, ohne eine Bewegung des Koppelgliedes einzuleiten. Hierdurch wird wirksam vermieden, dass durch ein mutwilliges Öffnen des Schutzelementes gleichzeitig die Kameraeinheit nach außen mitbewegt wird.

Eine weitere die Funktionalität erweiternde Maßnahme sieht vor, dass der Mechanismus innerhalb einer Gehäuseeinheit angeordnet ist, in dem ein Schließzylinder für ein Schloss einer Schließvorrichtung drehbar gelagert ist, wobei der Schließzylinder in der Schließstellung des Schutzelementes vollständig abgedeckt ist. Somit kann die erfindungsgemäße Vorrichtung ebenfalls im Rahmen einer mechanischen Notentriegelung für ein bewegliches Teil eines Kraftfahrzeuges, insbesondere einer Tür, einer Heckklappe, eines Kofferraumdeckels oder dergleichen eingesetzt werden. Der Schließzylinder ist in der Normalfallsituation wirksam durch das Schutzelement abgedeckt. Falls die Schließvorrichtung, beispielsweise die Zentralverriegelung, ausgefallen ist, kann durch ein manuelles Öffnen des Schutzelementes der Zugang zum Schließzylinder für den Benutzer ermöglicht werden. Aufgrund des erfindungsgemäßen Mechanismus wird jedoch durch den manuellen Öffnungsvorgang des Schutzelementes nicht die Kameraeinheit aus ihrer Ruheposition verschwenkt. Durch Betätigung des Schließzylinders kann ein manuelles Öffnen des Schlosses bewirkt werden.

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen:
- Fig. 1: die erfindungsgemäße Vorrichtung, wobei die Kameraeinheit in ihrer Ruheposition und das Schutzelement in der Schließstellung sich befinden,
- Fig. 2: die Vorrichtung gemäß Fig. 1, wobei das Schutzelement in einer ersten Offenstellung sich befindet,
- Fig. 3: die Vorrichtung gemäß Fig. 1, wobei sich das Schutzelement in einer weiteren Offenstellung befindet und die Kameraeinheit die aktive Position einnimmt und
- Fig. 4: die Vorrichtung gemäß Fig. 1, wobei das Schutzelement manuell in eine Offenstellung bewegt wurde.

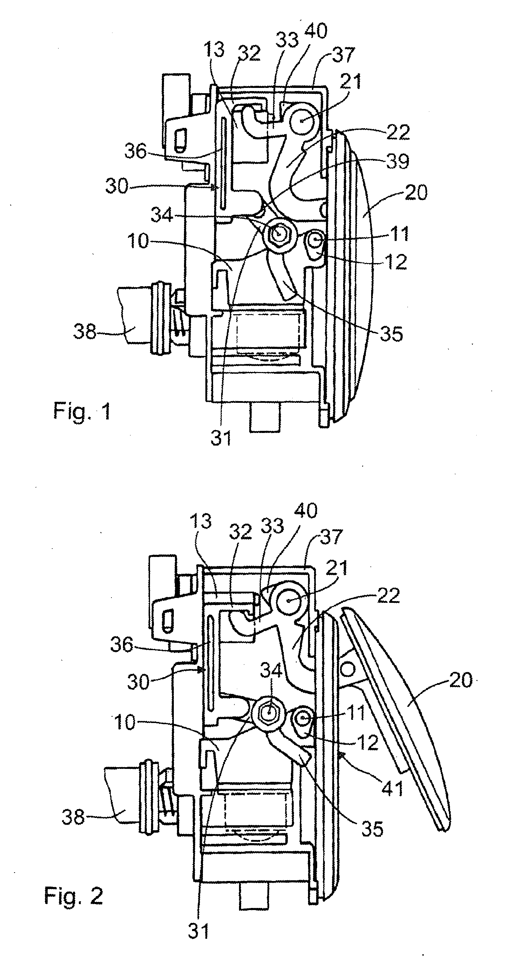

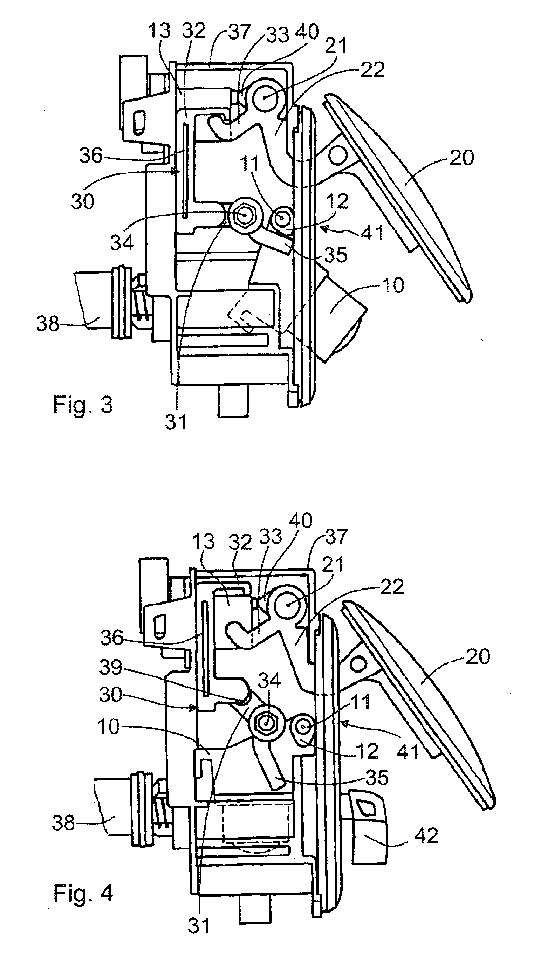

In den Fig. 1 bis 4 ist eine mögliche Ausführungsform der erfindungsgemäßen Vorrichtung für ein Kraftfahrzeug mit einer drehbar gelagerten Kameraeinheit 10 dargestellt. Die Kameraeinheit 10 ist über einen nicht dargestellten Motor in eine Ruheposition (s. Fig. 1, Fig. 2 und Fig. 4) und in eine aktive Position (s. Fig. 3) bringbar. Des Weiteren weist die Vorrichtung ein Schutzelement 20 in Form eines Deckels auf, das drehbar um eine Achse 21 bewegbar ist. In Fig. 1 befindet sich das Schutzelement 20 in einer Schließstellung. In den weiteren Darstellungen nimmt das Schutzelement 20 eine Offenstellung ein.

Die Kameraeinheit 10 befindet sich innerhalb einer Gehäuseeinheit 37 und ist um eine zweite Achse 11, die beabstandet zur ersten Achse 21 angeordnet ist, aus der Ruheposition in die aktive Position bewegbar. Erfindungsgemäß ist das Schutzelement 20 über einen bogenförmigen Schwenkarm 22 mit der ersten Achse 21 verbunden. Ferner ist innerhalb der Gehäuseeinheit 37 ein Mechanismus 30 vorgesehen, der durch den Motor antreibbar ist und sowohl mit dem Schutzelement 20 als auch mit der Kameraeinheit 10 in mechanischer Verbindung steht. Hierbei ist der Mechanismus 30 als Getriebe ausgeführt, das ein Antriebsglied 31, ein Koppelglied 32 und ein Abtriebsglied 33 aufweist. Am Antriebsglied 31 greift der Motor an. Das Abtriebsglied 33 ist materialeinheitlich und einstückig mit dem Schwenkarm 22 verbunden. Das Koppelglied 32 befindet sich zwischen dem Abtriebsglied 33 und dem Antriebsglied 31, wobei das Koppelglied 32 gelenkartig mit dem Antriebsglied 31 verbunden ist. Wie aus den Figuren zu erkennen ist, ist das Antriebsglied 31 an einer Achse 34 drehbar gelagert, über die der Motor eine Drehbewegung in den Mechanismus 30 einleitet. Das Koppelglied 32 ist mit einer linearförmig ausgeführten Nut 36 ausgebildet. Des Weiteren ist das Koppelglied 32 am Antriebsglied 31 zusätzlich translatorisch geführt. Hierzu ist eine linearförmige Nut 39 am Antriebsglied 31 vorgesehen, in die das Koppelglied 32 mit einem Ende eingreift. Während sich das Antriebsglied 31 um die Drehachse 34 bewegt, wird das Koppelglied 32 entlang einer translatorischen Führung, die in die Nut 36 eingreift, geführt. Gleichzeitig verschiebt sich das eine Ende des Koppelgliedes 32, das mit dem Antriebsglied 31 zusammenwirkt, entlang der Nut 39.

Das Antriebsglied 31 ist mit einem Aktivierungsmittel 35 in Form eines Schwenkarmes 35 ausgebildet. Des Weiteren ist die Kameraeinheit 10 mit einem Kraftangriffsbereich 12 in Form eines Nockens ausgebildet, der an der zweiten Achse 11 angeordnet ist. Innerhalb der Gehäuseeinheit 37 ist ein Schließzylinder 38 für ein Schloss einer Schließvorrichtung, insbesondere einer Zentralvorrichtung eines Kraftfahrzeuges, drehbar gelagert. Auf der Höhe der ersten Achse 21 ist ein Schaltelement 13 befestigt, das durch eine Bewegung des Schutzelementes 20 aktivierbar ist und ein Signal zum elektrischen Öffnen des Schlosses auslöst. Im vorliegenden Ausführungsbeispiel ist das Schaltelement 13 ein Mikroschalter, der durch einen Nocken 40, der sich mit dem Schwenkarm 22 mitbewegt, aktiviert werden kann.

Wird nun der Motor aktiviert, beispielsweise durch Einlegen eines Rückwärtsganges, erfolgt eine Drehbewegung des Antriebsgliedes 31 um die Achse 34 gegen den Uhrzeigersinn. Der Mechanismus 30 wird somit aus seiner Ausgangslage, die in Fig. 1 dargestellt ist, gebracht, wobei das Koppelglied 32 linear nach unten bewegt wird und gleichzeitig sich entlang der Nut 39 mit seinem unteren Ende der Achse 34 nähert. Das Koppelglied 32 ist an seinem zweiten Ende, das dem Abtriebsglied 33 zugewandt ist, L-förmig oder hakenförmig ausgeführt. Hier liegt das Abtriebsglied 33 lediglich am Koppelglied 32 an. Aufgrund der translatorischen Bewegung des Koppelgliedes 32 wird das bogenförmig ausgebildete Abtriebsglied 33 gegen den Uhrzeigersinn um die Achse 21 verschwenkt. Gleichzeitig dreht sich der Schwenkarm 22 um die Achse 21 und bewirkt, dass das Schutzelement 20 von seiner Schließstellung in eine Offenstellung bewegt wird. Die Gehäuseeinheit 37 weist eine Öffnung 41 auf, durch die der Schwenkarm 22 in Fig. 2 hindurchragt.

Gleichzeitig bewegt sich der Schwenkarm 35 in Richtung Nocken 12 der Kameraeinheit 10. Während das Schutzelement 20 um die Achse 21 nach außen verschwenkt wird, verbleibt die Kameraeinheit 10 in ihrer Ruheposition. Dieser entkoppelte Betriebszustand des Mechanismus 30 wechselt genau dann, wenn der Schwenkarm 35 den Nocken 12 der Kameraeinheit 10 kontaktiert, welches in Fig. 3 dargestellt ist. Wie zu erkennen ist, wird die Kameraeinheit 10 durch den angreifenden Schwenkarm 35 von ihrer Ruheposition in die aktive Position bewegt.

Gemäß Fig. 4 ist die erfindungsgemäße Vorrichtung dargestellt, bei der für eine Notfallsituation, bei der die komplette Fahrzeugelektronik ausgefallen ist, das Schutzelement 20 manuell in eine Offenstellung bewegt worden ist. Durch einen Notschlüssel 42, der im Schließzylinder 38 sich befindet, kann manuell ein Schloss an der Schließvorrichtung, welches in Wirkverbindung mit dem Schließzylinder 38 steht, geöffnet werden. In der Schließstellung des Schutzelementes 20 (s. Fig. 1) ist der Schließzylinder 38 vollständig abgedeckt.

Das dargestellte Ausführungsbeispiel kann ferner für ein elektrisches Öffnen des Schlosses bewirkt werden. Im Bereich der Achse 21 ist ein mit dem Schwenkarm 22 sich mitbewegender Nocken 40 angeordnet, der während einer manuellen Bewegung des Schutzelementes 20 in eine Offenstellung in Richtung des beabstandeten Schaltelementes 13 bewegt wird. In Fig. 3 kontaktiert der Nocken 40 das Schaltelement 13, welches ein Signal zum elektronischen Öffnen des Schlosses aussendet. Die erfindungsgemäße Vorrichtung ist beispielsweise an einer Heckklappe angeordnet, so dass das Schaltelement 13 das Heckklappenschloss elektronisch öffnen kann und der Bediener beispielsweise an dem Schutzelement 20 weiter ziehen kann, um die Heckklappe anzuheben und diese somit zu öffnen. Besonders vorteilhaft ist, dass für den elektrischen oder manuellen Öffnungsvorgang des Schlosses die Kameraeinheit 10 durch die entsprechende Ausgestaltung des Mechanismus 30 entkoppelt ist und geschützt in der Ruheposition verbleibt.

### Bezugszeichenliste

- 10: Kameraeinheit
- 11: zweite Achse
- 12: Kraftangriffsbereich, Nocken
- 13: Schaltelement

- 20: Schutzelement
- 21: erste Achse
- 22: Schwenkarm des Schutzelementes

- 30: Mechanismus
- 31: Antriebsglied
- 32: Koppelglied
- 33: Abtriebsglied
- 34: Achse
- 35: Aktivierungsmittel, Schwenkarm
- 36: Nut
- 37: Gehäuseeinheit
- 38: Schließzylinder
- 39: Nut
- 40: Nocken
- 41: Öffnung
- 42: Notschlüssel

## Patentansprüche

1. Vorrichtung für ein Kraftfahrzeug mit einer drehbar gelagerten Kameraeinheit (10), die über einen Motor in eine Ruheposition und in eine aktive Position bringbar ist, und einem Schutzelement (20), das drehbar um eine erste Achse (21) in eine Schließstellung und in eine Offenstellung führbar ist, wobei
in der Schließstellung die Kameraeinheit (10) in ihrer Ruheposition von außen unzugänglich hinter dem Schutzelement (20) sich befindet, und in der Offenstellung des Schutzelementes (20) die Kameraeinheit (10) in die aktive Position zur Bilderfassung bewegbar ist, wobei
die Kameraeinheit (10) um eine zweite Achse (11), die beabstandet zur ersten Achse (21) angeordnet ist, aus der Ruheposition in die aktive Position bewegbar ist,
das Schutzelement (20) über einen Schwenkarm (22) mit der ersten Achse (21) verbunden ist, und
der Motor einen kraftfahrzeugseitigen Mechanismus (30) antreibt, der sowohl mit dem Schutzelement (20) als auch mit der Kameraeinheit (10) in mechanischer Verbindung steht, **dadurch gekennzeichnet, dass** der Mechanismus (30) derart ausgestaltet ist, dass in einem Betriebszustand die Kameraeinheit (10) vom Mechanismus (30) entkoppelt ist und eine Bewegung des Schutzelementes (20) von der Schließstellung in die Offenstellung durchführbar ist, wobei die Kameraeinheit (10) in der Ruheposition verbleibt.

2. Vorrichtung nach Anspruch 1,
**dadurch gekennzeichnet,**
**dass** der Mechanismus (30) als Getriebe ausgeführt ist, das ein Antriebsglied (31), an dem der Motor angreift, ein Koppelglied (32) und ein Abtriebsglied (33) aufweist, das an der ersten Achse (21) angreift.

3. Vorrichtung nach Anspruch 2,
**dadurch gekennzeichnet,**
**dass** das Koppelglied (32) zwischen dem Abtriebsglied (33) und dem Antriebsglied (31) angeordnet ist, wobei das Koppelglied (32) gelenkartig mit dem Antriebsglied (31) verbunden ist.

4. Vorrichtung nach einem der Ansprüche 2 oder 3,
**dadurch gekennzeichnet,**
**dass** das Antriebsglied (31) an einer Achse (34) drehbar gelagert ist, über die der Motor eine Drehbewegung in den Mechanismus (30) einleitet.

5. Vorrichtung nach einem der Ansprüche 2 bis 4,
**dadurch gekennzeichnet,**
**dass** das Antriebsglied (31) ein Aktivierungsmittel (35) aufweist, das in einem gekoppelten Betriebszustand des Mechanismus (30) auf die Kameraeinheit (10) wirkt, wodurch die Kameraeinheit (10) von der Ruheposition in die aktive Position bewegbar ist, und in dem entkoppelten Betriebszustand des Mechanismus (30) einen definierten Abstand zur Kameraeinheit (10) aufweist.

6. Vorrichtung nach Anspruch 5,
**dadurch gekennzeichnet,**
**dass** das Aktivierungsmittel (35) als Schwenkarm (35) ausgebildet ist, wobei der Schwenkarm (35) und das Antriebsglied (31) materialeinheitlich als ein einheitliches Bauteil ausgeführt sind.

7. Vorrichtung nach einem der Ansprüche 5 oder 6,
**dadurch gekennzeichnet,**
**dass** die Kameraeinheit (10) einen Kraftangriffsbereich (12) aufweist, auf den das Aktivierungsmittel (35) im gekoppelten Betriebszustand des Mechanismus (30) einwirkt.

8. Vorrichtung nach Anspruch 7,
**dadurch gekennzeichnet,**
**dass** das Aktivierungsmittel (35) und der Kraftangriffsbereich (12) derart zueinander angeordnet sind, dass im entkoppelten Betriebszustand eine Bewegung des Schutzelementes (20) von der Schließstellung in die Offenstellung durchführbar ist bis der Mechanismus (30) in den gekoppelten Zustand wechselt und zeitlich versetzt zur Bewegung des Schutzelementes (20) eine Bewegung der Kameraeinheit (10) von der Ruheposition in die aktive Position einleitet.

9. Vorrichtung nach einem der Ansprüche 2 bis 8,
**dadurch gekennzeichnet,**
**dass** das Koppelglied (32) translatorisch geführt ist.

10. Vorrichtung nach einem der Ansprüche 2 bis 9,
**dadurch gekennzeichnet,**
**dass** das Koppelglied (32) mit einer linearförmig ausgeführten Nut (36) ausgebildet ist.

11. Vorrichtung nach einem der Ansprüche 7 bis 10,
**dadurch gekennzeichnet,**
**dass** der Kraftangriffsbereich (12) als Nocken (12) ausgeführt ist, der an der zweiten Achse (11) angeordnet ist.

12. Vorrichtung nach einem der Ansprüche 2 bis 11,
**dadurch gekennzeichnet,**
**dass** das Koppelglied (32) am Antriebsglied (31) zusätzlich translatorisch geführt ist.

13. Vorrichtung nach einem der Ansprüche 2 bis 12,
**dadurch gekennzeichnet,**
**dass** das Koppelglied (32) derart am Abtriebsglied (33) anliegt, dass durch ein manuelles Bewegen des Schutzelementes (20) von der Schließstellung in die Offenstellung das Abtriebsglied (33) vom Koppelglied (32) sich entkoppelt, ohne eine Bewegung des Koppelgliedes (32) einzuleiten.

14. Vorrichtung nach einem der vorhergehenden Ansprüche,
**dadurch gekennzeichnet,**
**dass** der Mechanismus (30) innerhalb einer Gehäuseeinheit (37) angeordnet ist, in dem ein Schließzylinder (38) für ein Schloss einer Schließvorrichtung drehbar gelagert ist, wobei der Schließzylinder (38) in der Schließstellung des Schutzelementes (20) vollständig abgedeckt ist.

15. Vorrichtung nach Patentanspruch 14,
**dadurch gekennzeichnet,**
**dass** ein Schaltelement (13) an der Gehäuseeinheit (37) angeordnet ist, das durch eine Bewegung des Schutzelementes (20) aktivierbar ist und ein Signal zum elektrischen Öffnen des Schlosses auslöst.

## Claims

1. A device for a motor vehicle with a rotatably mounted camera unit (10), which can be brought into a rest position and into an active position by a means of a motor, and a protective element (20), which can be rotatably guided around a first axle (21) into a closed setting and into an open setting, wherein
in the closed setting the camera unit (10) is located in its rest position externally inaccessible behind the protective element (20), and when the protective element (20) is in the open setting the camera unit (10) is able to be moved into the active position for capturing an image, wherein
the camera unit (10) can be moved around a second axle (11), which is arranged spaced apart from the first axle (21), out of the rest position into the active position,
the protective element (20) is connected to the first axle (21) via a pivoting arm (22), and
the motor drives a mechanism (30) on the motor vehicle which is mechanically connected to both the protective element (20) and the camera unit (10), **characterised in that** the mechanism (30) is configured such that in an operating state the camera unit (10) is uncoupled from the mechanism (30) and a movement of the protective element (20) can be carried out from the closed setting into the open setting, whereby the camera unit (10) remains in the rest position.

2. The device according to Claim 1,
**characterised in that**
the mechanism (30) is designed as a transmission that has a drive member (31), which is acted on by the motor, a coupling member (32) and a power take-off member (33) which acts on the first axle (21).

3. The device according to Claim 2,
**characterised in that**
the coupling member (32) is arranged between the power take-off member (33) and the drive member (31), wherein the coupling member (32) is connected to the drive member (31) in an articulated manner.

4. The device according to one of claims 2 or 3,
**characterised in that**
the drive member (31) is rotatably mounted on an axle (34) via which the motor initiates a rotational movement in the mechanism (30).

5. The device according to one of claims 2 to 4,
**characterised in that**
the drive member (31) has an activation means (35) which takes effect on the camera unit (10) when the mechanism (30) is in a coupled operating state, as a result of which the camera unit (10) can be moved from the rest position into the active position, and has a defined spacing to the camera unit (10) when the mechanism (30) is in the uncoupled operating state.

6. The device according to claim 5,
**characterised in that**
the activation means (35) is formed as a pivoting arm (35), wherein the pivoting arm (35) and the drive member (31) are designed from the same material as a unitary component.

7. The device according to one of claims 5 or 6,
**characterised in that**
the camera unit (10) has a force exertion region (12) on which the activation means (35) acts when the mechanism (30) is in the coupled operating state.

8. The device according to claim 7,
**characterised in that**
the activation means (35) and the force exertion region (12) are arranged relative to one another such that, in the uncoupled operating state, it is possible to carry out a movement of the protective element (20) from the closed setting into the open setting until the mechanism (30) changes into the coupled state and, offset in time to the movement of the protective element (20), initiates a movement of the camera unit (10) from the rest position into the active position.

9. The device according to one of claims 2 to 8,
**characterised in that**
the coupling member (32) is guided in a translational manner.

10. The device according to one of claims 2 to 9,
**characterised in that**
the coupling member (32) is formed with a groove (36) designed in a linear shape.

11. The device according to one of claims 7 to 10,
**characterised in that**
the force exertion region (12) is designed as a cam (12) arranged on the second axle (11).

12. The device according to one of claims 2 to 11,
**characterised in that**
the coupling member (32) is additionally translationally guided on the drive member (31).

13. The device according to one of claims 2 to 12,
**characterised in that**
the coupling member (32) abuts the power take-off member (33), such that through manually moving the protective element (20) from the closed setting into the open setting, the power take-off member (33) uncouples from the coupling member (32) without initiating a movement of the coupling member (32).

14. The device according to one of the preceding claims,
**characterised in that**
the mechanism (30) is arranged inside a casing unit (37) in which there is rotatably mounted a locking cylinder (38) for a lock of a closing device, whereby the locking cylinder (38) is fully covered when the protective element (20) is in the closed setting.

15. The device according to claim 14,
**characterised in that**
a switch element (13), which can be activated through a movement of the protective element (20) and triggers a signal

## Revendications

1. Dispositif pour un véhicule automobile, avec une unité caméra (10) montée rotative, qui peut être amenée au moyen d'un moteur dans une position de repos et dans une position active, et avec un élément de protection (20), qui peut être amené par rotation autour d'un premier axe (21) dans une position fermée et dans une position ouverte,
sachant que dans la position fermée, l'unité caméra (10) se trouve dans sa position de repos, inaccessible de l'extérieur, derrière l'élément de protection (20), et que dans la position ouverte de l'élément de protection (20), l'unité caméra (10) peut être déplacée dans la position active pour la prise de vues,
sachant que l'unité caméra (10) peut être déplacée de la position de repos dans la position active autour d'un deuxième axe (11) qui est disposé à distance du premier axe (21),
que l'élément de protection (20) est relié au premier axe (21) par l'intermédiaire d'un bras pivotant (22),
et que le moteur entraîne un mécanisme (30) du véhicule automobile qui se trouve en liaison mécanique tant avec l'élément de protection (20) qu'avec l'unité caméra (10),
**caractérisé en ce que** le mécanisme (30) est conçu de telle sorte que, dans un état de fonctionnement, l'unité caméra (10) est désaccouplée du mécanisme (30) et l'élément de protection (20) peut être déplacé de la position fermée dans la position ouverte, l'unité caméra (10) restant dans la position de repos.

2. Dispositif selon la revendication 1, **caractérisé en ce que** le mécanisme (30) est réalisé sous forme de mécanisme de transmission qui présente un organe menant (31) sur lequel agit le moteur, un organe d'accouplement (32) et un organe mené (33) qui agit sur le premier axe (21).

3. Dispositif selon la revendication 2, **caractérisé en ce que** l'organe d'accouplement (32) est disposé entre l'organe mené (33) et l'organe menant (31), sachant que l'organe d'accouplement (32) est relié de manière articulée à l'organe menant (31).

4. Dispositif selon l'une des revendications 2 ou 3, **caractérisé en ce que** l'organe menant (31) est monté à rotation sur un axe (34) par l'intermédiaire duquel le moteur introduit un mouvement de rotation dans le mécanisme (30).

5. Dispositif selon l'une des revendications 2 à 4, **caractérisé en ce que** l'organe menant (31) présente un moyen d'activation (35) qui agit sur l'unité caméra (10) dans un état de fonctionnement accouplé du mécanisme (30), de sorte que l'unité caméra (10) peut être déplacée de la position de repos dans la position active, et qui présente une distance définie par rapport à l'unité caméra (10) dans l'état de fonctionnement désaccouplé du mécanisme (30).

6. Dispositif selon la revendication 5, **caractérisé en ce que** le moyen d'activation (35) est réalisé sous forme de bras pivotant (35), sachant que le bras pivotant (35) et l'organe menant (31) sont réalisés par liaison de matière sous la forme d'un même élément de construction.

7. Dispositif selon l'une des revendications 5 ou 6, **caractérisé en ce que** l'unité caméra (10) présente une région d'attaque de force (12) sur laquelle agit le moyen d'activation (35) dans l'état de fonctionnement accouplé du mécanisme (30).

8. Dispositif selon la revendication 7, **caractérisé en ce que** le moyen d'activation (35) et la région d'attaque de force (12) sont disposés l'un par rapport à l'autre de telle sorte que, dans l'état de fonctionnement désaccouplé, un mouvement de l'élément de protection (20) de la position fermée dans la position ouverte peut être effectué jusqu'à ce que le mécanisme (30) passe dans l'état accouplé et déclenche, avec un décalage de temps par rapport au mouvement de l'élément de protection (20), un mouvement de l'unité caméra (10) de la position de repos dans la position active.

9. Dispositif selon l'une des revendications 2 à 8, **caractérisé en ce que** l'organe d'accouplement (32) est guidé en translation.

10. Dispositif selon l'une des revendications 2 à 9, **caractérisé en ce que** l'organe d'accouplement (32) est doté d'une rainure (36) réalisée linéaire.

11. Dispositif selon l'une des revendications 7 à 10, **caractérisé en ce que** la région d'attaque de force (12) est réalisée sous forme de came (12) qui est disposée sur le deuxième axe (11).

12. Dispositif selon l'une des revendications 2 à 11, **caractérisé en ce que** l'organe d'accouplement (32) est en outre guidé en translation sur l'organe menant (31).

13. Dispositif selon l'une des revendications 2 à 12, **caractérisé en ce que** l'organe d'accouplement (32) s'applique sur l'organe mené (33) de telle sorte que, par un déplacement manuel de l'élément de protection (20) de la position fermée dans la position ouverte, l'organe mené (33) se désaccouple de l'organe d'accouplement (32) sans déclencher un mouvement de l'organe d'accouplement (32).

14. Dispositif selon l'une des revendications précédentes, **caractérisé en ce que** le mécanisme (30) est disposé à l'intérieur d'une unité boîtier (37) dans laquelle un cylindre de serrure (38) pour une serrure d'un dispositif de fermeture est monté à rotation, sachant que le cylindre de serrure (38) est totalement recouvert dans la position fermée de l'élément de protection (20).

15. Dispositif selon la revendication 14, **caractérisé en ce qu'**un élément de commutation (13) est disposé sur l'unité boîtier (37), élément qui peut être activé par un mouvement de l'élément de protection (20) et qui déclenche un signal pour l'ouverture électrique de la serrure.
